# EUROPEAN PATENT SPECIFICATION

(11) **EP 3 896 388 B1**
(45) Date of publication and mention of the grant of the patent: **26.07.2023**
(21) Application number: 19910611.3
(22) Date of filing: 10.05.2019
(51) Int. Cl.: G01B 21/20, G01B 11/245, G01B 21/04, G01B 11/24, G06T 7/55, G01S 17/89

(54) **THREE-DIMENSIONAL RECONSTRUCTION SYSTEM, THREE-DIMENSIONAL RECONSTRUCTION METHOD, AND THREE-DIMENSIONAL RECONSTRUCTION PROGRAM**
DREIDIMENSIONALE REKONSTRUKTIONSSYSTEM, DREIDIMENSIONALES REKONSTRUKTIONSVERFAHREN UND PROGRAMM ZUR DREIDIMENSIONALEN REKONSTRUKTION
SYSTÈME DE RECONSTRUCTION EN TROIS DIMENSIONS, PROCÉDÉ DE RECONSTRUCTION EN TROIS DIMENSIONS ET PROGRAMME DE RECONSTRUCTION EN TROIS DIMENSIONS

(30) Priority: 16.01.2019 JP 2019004819
(43) Date of publication of application: 20.10.2021
(73) Proprietor: MITSUBISHI ELECTRIC CORPORATION, Chiyoda-ku Tokyo 100-8310 (JP)
(72) Inventor: YAMAZAKI Kento, Tokyo 100-8310 (JP); OKAHARA Kohei, Tokyo 100-8310 (JP); MINAGAWA Jun, Tokyo 100-8310 (JP); MIZUNO Shinji, Toyota-shi, Aichi 470-0392 (JP); SAKATA Shintaro, Toyota-shi, Aichi 470-0392 (JP); SAKAKIBARA Takumi, Toyota-shi, Aichi 470-0392 (JP)
(74) Representative: Pfenning, Meinig & Partner mbB
(86) International application number: PCT/JP2019/018759
(87) International publication number: WO 2020/148926

(56) References cited:
- WO-A1-2005/080914
- WO-A1-2018/043225
- JP-A- 2003 014 435
- JP-A- 2018 028 535
- JP-A- 2018 195 241
- US-A1- 2018 253 894
- US-B1- 8 848 201

## Description

### TECHNICAL FIELD

The present invention relates to a three-dimensional reconstruction system, a three-dimensional reconstruction method and a three-dimensional reconstruction program.

### BACKGROUND ART

There has been proposed a system that reconstructs three-dimensional information regarding a target object existing in real space by using a plurality of pieces of real space information acquired by a plurality of sensors (see Non-patent Reference 1, for example). The plurality of sensors are a plurality of Kinects, for example. The Kinect is a registered trademark of Microsoft Corporation. The Kinect is an example of a motion capture device. The real space information acquired by each sensor is, for example, depth information indicating the distance from the sensor to the target object. The reconstructed three-dimensional information is integrated spatial information generated by integrating the plurality of pieces of real space information acquired by the sensors.

### PRIOR ART REFERENCE

### NON-PATENT REFERENCE

Non-patent Reference 1: Marek Kowalski and two others, "Livescan3D: A Fast and Inexpensive 3D Data Acquisition System for Multiple Kinect v2 Sensors"

### Patent Literature:

US 2018/253894 A1 discloses techniques for 3D model reconstruction of dynamic scenes using hybrid foreground-background processing.

US 8 848 201 B1 discloses receiving, from a scanning system, 3D information associated with an object having a first resolution. A region of interest of the object may be determined by a processor based on the 3D information associated with the object. Additionally, instructions for operating the scanning system to determine additional information associated with the region of interest of the object may be determined. The additional information associated with the region of interest may have a second resolution that is higher than the first resolution. The instructions may be provided to the scanning system to determine the additional information associated with the region of interest of the object.

WO 2018/043225 A1 discloses a multiple viewpoint image capturing system including: a plurality of cameras that capture videos in a predetermined space from different positions; a circumstance sensing unit that senses at least one of circumstances of the respective cameras and circumstances of the predetermined space, and outputs the sensed circumstances in a form of capturing circumstance information; and an event detector that detects a predetermined event based on the capturing circumstance information, determines whether to perform camera calibration in a case of detecting the predetermined event, and outputs camera calibration information that indicates the camera calibration to be performed in a case of determining that the camera calibration is to be performed.

### SUMMARY OF THE INVENTION

### PROBLEM TO BE SOLVED BY THE INVENTION

However, in order to correctly grasp a situation in the real space, it is necessary to broadly grasp the whole of the situation and grasp an attention part in detail. However, the attention part has a possibility of moving, and thus even if a plurality of sensors are set, there is a danger of a lack of information necessary for grasping the situation due to deviation of the attention part from a detectable range or insufficiency of resolution. While it is conceivable to additionally set sensors along moving paths of the attention part to decrease the occurrence of such situations, there is a problem in that the cost for the system rises due to the additional setting of the sensors.

An object of the present invention, which has been made to resolve the above-described problem with the conventional technology, is to provide a three-dimensional reconstruction system capable of reconstructing the three-dimensional information representing the attention part at a low cost and a three-dimensional reconstruction method and a three-dimensional reconstruction program used for reconstructing the three-dimensional information representing the attention part at a low cost.

### MEANS FOR SOLVING THE PROBLEM

The invention is defined by the appended claims.

### EFFECT OF THE INVENTION

According to the present invention, an advantage is obtained in that the three-dimensional information necessary for grasping a situation in the space can be reconstructed at a low cost.

### BRIEF DESCRIPTION OF THE DRAWINGS

Fig. 1 is a diagram schematically showing an example of arrangement of a plurality of sensors that provide a three-dimensional reconstruction device according to a first embodiment useful for understanding the present invention with three-dimensional information as real space information and a target object existing in real space.
Fig. 2 is a diagram schematically showing another example of the arrangement of the plurality of sensors that provide the three-dimensional reconstruction device according to the first embodiment with the three-dimensional information and the target object existing in the real space.
Fig. 3 is a diagram schematically showing another example of the arrangement of the plurality of sensors that provide the three-dimensional reconstruction device according to the first embodiment with the three-dimensional information and the target object existing in the real space.
Fig. 4 is a diagram schematically showing another example of the arrangement of the plurality of sensors that provide the three-dimensional reconstruction device according to the first embodiment with the three-dimensional information and the target object existing in the real space.
Fig. 5 is a functional block diagram schematically showing a configuration of the three-dimensional reconstruction device according to the first embodiment.
Fig. 6 is a diagram showing an example of a hardware configuration of the three-dimensional reconstruction device according to the first embodiment.
Fig. 7 is a flowchart showing an operation of the three-dimensional reconstruction device according to the first embodiment.
Fig. 8 is a flowchart showing a three-dimensional information reconstruction operation in Fig. 7.
Fig. 9 is a diagram schematically showing an example of arrangement of a plurality of sensors that provide a three-dimensional reconstruction device according to a second embodiment with the three-dimensional information as the real space information and a target object existing in the real space.
Fig. 10 is a schematic diagram showing a configuration example of an unmanned moving apparatus.
Fig. 11 is a functional block diagram schematically showing the configuration of the unmanned moving apparatus shown in Fig. 10.
Fig. 12 is a functional block diagram schematically showing a configuration of the three-dimensional reconstruction device according to the second embodiment.
Fig. 13 is a flowchart showing an operation of the three-dimensional reconstruction device according to the second embodiment.
Fig. 14 is a flowchart showing a three-dimensional information reconstruction operation in Fig. 13.
Fig. 15 is a schematic diagram showing another configuration example of the unmanned moving apparatus.
Fig. 16 is a functional block diagram schematically showing the configuration of the unmanned moving apparatus shown in Fig. 15.

### MODE FOR CARRYING OUT THE INVENTION

A three-dimensional reconstruction system according to claim 1, a three-dimensional reconstruction method according to claim 8 and a three-dimensional reconstruction program according to claim 9 and according to each embodiment of the present invention will be described below with reference to the drawings. The following embodiments are just examples and a variety of modifications are possible within the scope of the present invention as defined by the appended claims

### First Embodiment

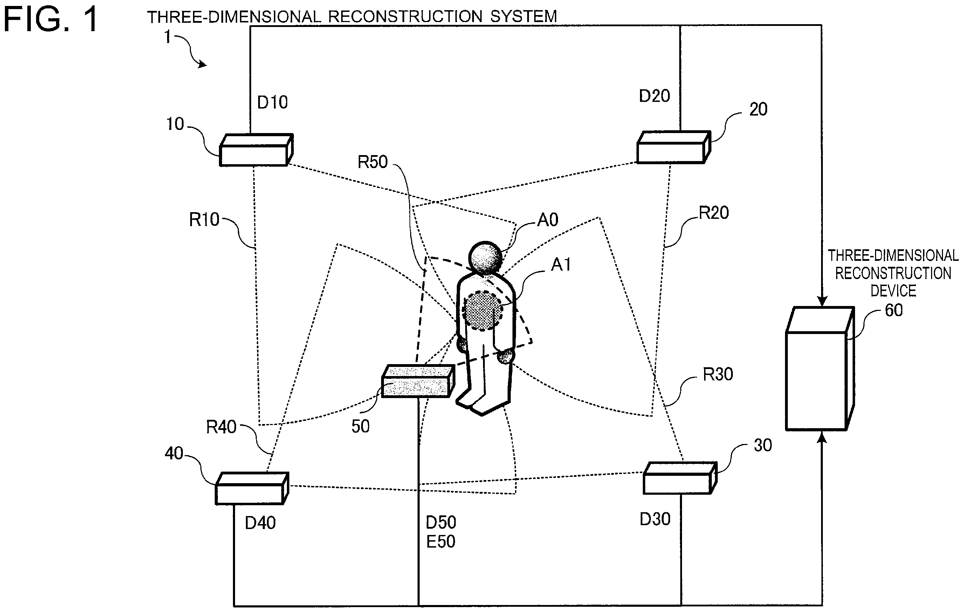

Fig. 1 is a diagram schematically showing an example of arrangement of a plurality of sensors 10, 20, 30, 40 and 50 that provide a three-dimensional reconstruction device 60 according to a first embodiment with three-dimensional information as real space information and a target object A0 existing in real space. The three-dimensional reconstruction device 60 generates integrated spatial information by integrating a plurality of pieces of real space information acquired by the sensors 10, 20, 30, 40 and 50. Put another way, the three-dimensional reconstruction device 60 reconstructs integrated three-dimensional information by integrating a plurality of pieces of three-dimensional information acquired by the sensors 10, 20, 30, 40 and 50. The three-dimensional reconstruction device 60 and the sensors 10, 20, 30, 40 and 50 constitute a three-dimensional reconstruction system 1.

Each sensor 10, 20, 30, 40, 50 is a device that acquires information regarding the real space. The sensors 10, 20, 30, 40, 50 are capable of acquiring depth information indicating the distance from the sensors 10, 20, 30, 40, 50 to a target object A0. The sensors 10, 20, 30, 40, 50 are depth cameras, for example. Each sensor 10, 20, 30, 40, 50 is referred to also as a motion capture device. A measurement principle used by the sensors 10, 20, 30, 40 and 50 is TOF (Time Of Flight), for example. However, the measurement principle used by the sensors 10, 20, 30, 40 and 50 can be any measurement principle as long as three-dimensional information representing the real space information can be generated.

The sensors 10, 20, 30 and 40 are arranged at predetermined positions. The sensors 10, 20, 30 and 40 are referred to also as "first sensors". Each of the sensors 10, 20, 30 and 40 is, for example, a sensor fixed to a ceiling, a wall, a different structure or the like. Each sensor 10, 20, 30, 40 measures the distance to a surface of an object existing in its detection range R10, R20, R30, R40. For example, each sensor 10, 20, 30, 40 detects the target object A0 and thereby generates three-dimensional information D10, D20, D30, D40 as real space information representing the target object A0. The three-dimensional information D10, D20, D30, D40 is referred to also as "first three-dimensional information". In Fig. 1, the target object A0 is a worker. However, the target object A0 can also be a machine in operation, a product that is moving, an article in the middle of processing, or the like. Further, the number of the sensors arranged at predetermined positions is not limited to four but can be a number other than four.

The sensor 50 is provided to be movable. The sensor 50 is referred to also as a "second sensor". The sensor 50 is a sensor whose position can be changed, a sensor whose posture can be changed, or a sensor whose position and posture can be changed. The position and the posture of the sensor 50 can (according to a non-claimed example) be changed by an operator of the sensor by holding the sensor 50 and moving the sensor 50. The sensor 50 may also be mounted on a supporting device that supports the sensor 50 so that the position and the posture of the sensor 50 can be changed, and the position and the posture of the sensor 50 may be changed by the operator.

According to the invention, the position and the posture of the sensor 50 is changed not by the operator of the sensor but by a moving apparatus that changes the position and the posture of the sensor 50. The sensor 50 is mounted on a moving apparatus having an automatic tracking function of controlling its own position and posture so that the sensor 50 keeps on detecting an attention part A1. This moving apparatus can also be, for example, an unmanned vehicle, an unmanned aircraft called a "drone", an unmanned vessel, or the like. The moving apparatus having the automatic tracking function will be described later in second and third embodiments.

The sensor 50 measures the distance to a surface of an object existing in a detection range R50. For example, the sensor 50 detects the attention part A1 of the target object A0 and thereby generates three-dimensional information D50 as real space information representing the attention part A1. The three-dimensional information D50 is referred to also as "second three-dimensional information". The attention part A1 is a region that the sensor 50 is desired to keep on detecting. For example, in a case where the target object A0 is a worker, the attention part A1 is an article in the middle of production and being assembled by the worker's hands. In Fig. 1, the attention part A1 is drawn as a range of a predetermined size in front of and in the vicinity of the chest of the worker as the target object A0. However, the attention part A1 can also be a range at a different position and of a different size.

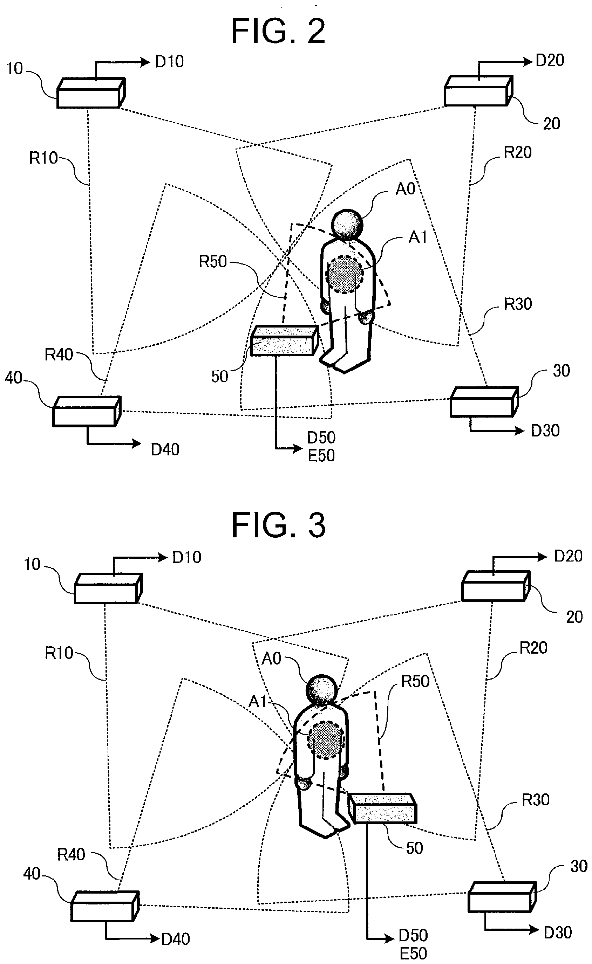

Fig. 2 is a diagram schematically showing another example of the arrangement of the plurality of sensors 10, 20, 30, 40 and 50 that provide the three-dimensional reconstruction device according to the first embodiment with the three-dimensional information as the real space information and the target object A0 existing in the real space. In Fig. 2, each component identical or corresponding to a component shown in Fig. 1 is assigned the same reference character as in Fig. 1. While the target object A0 in Fig. 1 exists in the vicinity of an intermediate position of the sensors 10, 20, 30 and 40, the target object A0 in Fig. 2 approaches the sensor 30, and consequently, the attention part A1 approaches the sensor 30 in Fig. 2. In this case, the sensor 50 keeps on detecting the attention part A1 by moving according to the movement of the attention part A1. In order to keep on detecting the attention part A1, the position, the posture, or both of the position and the posture of the sensor 50 is/are changed so that the attention part A1 remains existing in the detection range R50 of the sensor 50.

Fig. 3 is a diagram schematically showing another example of the arrangement of the plurality of sensors 10, 20, 30, 40 and 50 that provide the three-dimensional reconstruction device according to the first embodiment with the three-dimensional information as the real space information and the target object A0 existing in the real space. In Fig. 3, each component identical or corresponding to a component shown in Fig. 1 is assigned the same reference character as in Fig. 1. While the worker as the target object A0 in Fig. 1 is pointing his/her face towards the sensor 40, the worker as the target object A0 in Fig. 3 is pointing his/her face towards the sensor 30. Consequently, the attention part A1 is facing the sensor 30 in Fig. 3. In this case, the sensor 50 keeps on detecting the attention part A1 by moving according to the movement of the attention part A1. Namely, the position, the posture, or both of the position and the posture of the sensor 50 is/are changed so that the attention part A1 remains existing in the detection range R50 of the sensor 50.

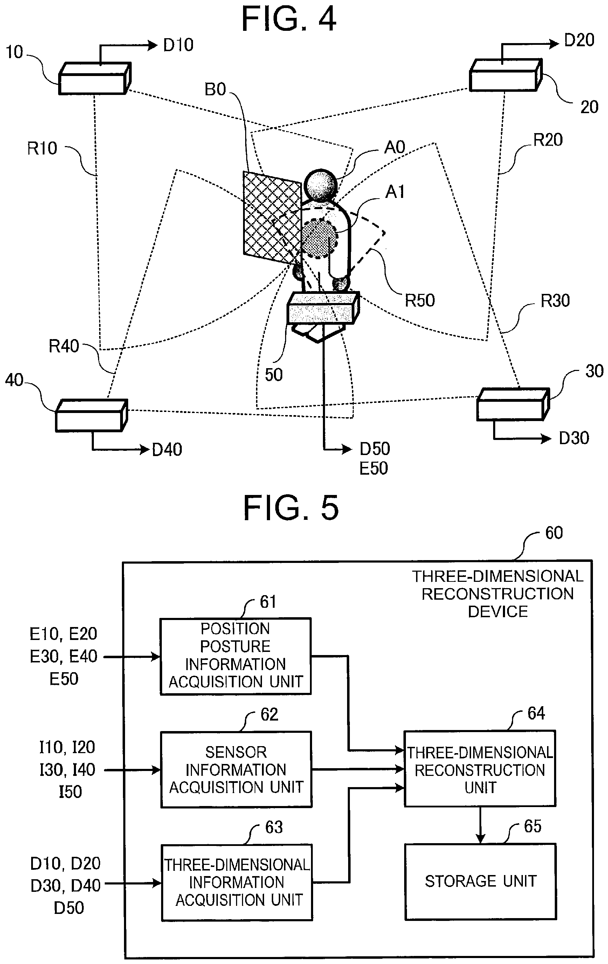

Fig. 4 is a diagram schematically showing another example of the arrangement of the plurality of sensors 10, 20, 30, 40 and 50 that provide the three-dimensional reconstruction device according to the first embodiment with the three-dimensional information as the real space information and the target object A0 existing in the real space. In Fig. 4, each component identical or corresponding to a component shown in Fig. 1 is assigned the same reference character as in Fig. 1. While no obstacle exists between the attention part A1 of the target object A0 and the sensor 50 in Fig. 1, Fig. 4 shows a state in which an obstacle B0 is situated between the attention part A1 of the target object A0 and the sensor 50. In this case, the sensor 50 keeps on detecting the attention part A1 by moving depending on the position of the obstacle B0. The position, the posture, or both of the position and the posture of the sensor 50 is/are changed so that the attention part A1 remains existing in the detection range R50 of the sensor 50.

Fig. 5 is a functional block diagram schematically showing a configuration of the three-dimensional reconstruction device 60 according to the first embodiment. The three-dimensional reconstruction device 60 is a device capable of executing a three-dimensional reconstruction method according to the first embodiment. The three-dimensional reconstruction device 60 is a computer, for example.

As shown in Fig. 5, the three-dimensional reconstruction device 60 includes a position posture information acquisition unit 61, a sensor information acquisition unit 62, a three-dimensional information acquisition unit 63 and a three-dimensional reconstruction unit 64. The three-dimensional reconstruction device 60 may include a storage unit 65 as a storage device that stores the three-dimensional information. The storage unit 65 can also be an external storage device connected to the three-dimensional reconstruction device 60.

The three-dimensional information acquisition unit 63 acquires the three-dimensional information D10, D20, D30 and D40 as the real space information from the sensors 10, 20, 30 and 40. Further, the three-dimensional information acquisition unit 63 acquires the three-dimensional information D50 as the real space information representing the attention part A1 from the sensor 50. The three-dimensional information acquisition unit 63 is desired to acquire the three-dimensional information D50 as the real space information representing the attention part A1 in real time. To acquire the three-dimensional information in real time means to acquire the three-dimensional information without executing a process of temporarily storing the three-dimensional information.

The sensor information acquisition unit 62 acquires sensor information I10, I20, I30 and I40 respectively indicating a property intrinsic to each of the sensors 10, 20, 30 and 40. The sensor information I10, I20, I30 and I40 is referred to also as "first sensor information". The sensor information acquisition unit 62 acquires sensor information I50 indicating a property intrinsic to the sensor 50. The sensor information I50 is referred to also as "second sensor information". The sensor information I10, I20, I30 and I40 is acquired previously. The sensor information I10, I20, I30 and I40 is previously inputted by a user operation or the like. However, the sensor information I10, I20, I30 and I40 may also be acquired from the sensors 10, 20, 30 and 40. The sensor information I50 is previously inputted by a user operation or the like. However, the sensor information I50 may also be acquired from the sensor 50.

In a case where the sensors 10, 20, 30, 40 and 50 are cameras, the sensor information I10, I20, I30, I40, I50 can include an intrinsic parameter such as the focal length of the camera.

The position posture information acquisition unit 61 acquires position posture information E10, E20, E30 and E40 respectively indicating the position and the posture of each of the sensors 10, 20, 30 and 40. The position posture information E10, E20, E30 and E40 is referred to also as "first position posture information". The position posture information acquisition unit 61 acquires position posture information E50 indicating the position and the posture of the sensor 50. The position posture information acquisition unit 61 may also estimate the position and the posture of the sensor 50 based on movement information on the attention part (e.g., moving direction, moving distance, etc.) indicated by the three-dimensional information acquired by the sensor 50. The position posture information E50 is referred to also as "second position posture information". The position posture information E10, E20, E30, E40 and E50 is information represented by a world coordinate system. The position posture information E10, E20, E30 and E40 is acquired previously. The position posture information E10, E20, E30 and E40 is previously inputted by a user operation or the like. However, the position posture information E10, E20, E30 and E40 may also be acquired from the sensors 10, 20, 30 and 40. The position posture information E50 is acquired from the sensor 50. The position posture information acquisition unit 61 is desired to acquire the position posture information E50 indicating the position and the posture of the sensor 50 in real time.

The position of each sensor 10, 20, 30, 40, 50 is desired to be represented by the world coordinate system. The posture of each sensor 10, 20, 30, 40, 50 is represented by a detection direction. The detection ranges (i.e., detectable ranges) R10, R20, R30, R40 and R50 of the sensors 10, 20, 30, 40 and 50 are determined from the position posture information E10, E20, E30, E40 and E50 and the sensor information I10, I20, I30, I40 and I50.

The three-dimensional reconstruction unit 64 reconstructs the three-dimensional information representing the attention part A1 from the three-dimensional information D10, D20, D30 and D40 and the three-dimensional information D50 by using the sensor information I10, I20, I30 and I40, the sensor information I50, the position posture information E10, E20, E30 and E40, and the position posture information E50. The storage unit 65 stores the three-dimensional information reconstructed by the three-dimensional reconstruction unit 64. Incidentally, the reconstructed three-dimensional information may also be outputted to a display device.

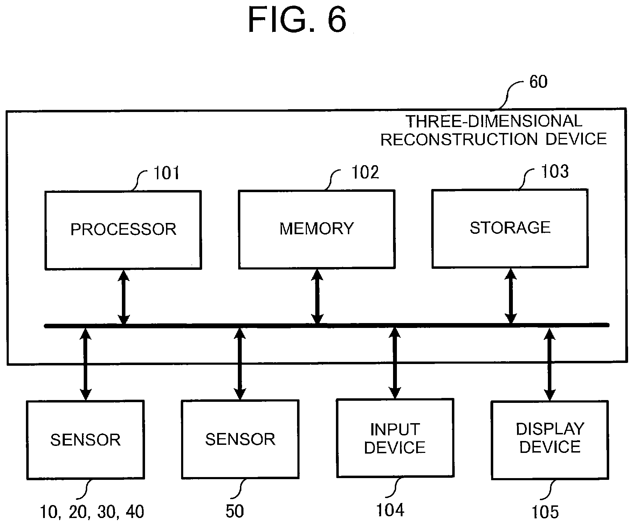

Fig. 6 is a diagram showing an example of a hardware configuration of the three-dimensional reconstruction device 60 according to the first embodiment. The three-dimensional reconstruction device 60 includes, for example, a memory 102 as a storage device that stores a program as software, namely, a three-dimensional reconstruction program according to the first embodiment, and a processor 101 as an information processing unit that executes the program stored in the memory 102. The three-dimensional reconstruction device 60 can also be a general-purpose computer. The processor 101 is an arithmetic device. The arithmetic device is a CPU (Central Processing Unit). The arithmetic device may also include a GPU (Graphics Processing Unit) in addition to the CPU. The arithmetic device may have a time provision function of providing time information.

The three-dimensional reconstruction program according to the first embodiment is stored in the memory 102 from a record medium storing information via a medium reading device (not shown), or via a communication interface (not shown) connectable to the Internet or the like. Further, the three-dimensional reconstruction device 60 may include storage 103 as a storage device that stores various items of information such as a database. The storage 103 can be a storage device existing in the cloud and connectable via a communication interface (not shown). Furthermore, an input device 104 as a user operation unit such as a mouse and a keyboard may be connected to the three-dimensional reconstruction device 60. Moreover, a display device 105 as a display for displaying images may be connected to the three-dimensional reconstruction device 60. The input device 104 and the display device 105 can also be parts of the three-dimensional reconstruction device 60.

The position posture information acquisition unit 61, the sensor information acquisition unit 62, the three-dimensional information acquisition unit 63 and the three-dimensional reconstruction unit 64 shown in Fig. 6 can be implemented by the processor 101 executing a program stored in the memory 102. Further, the storage unit 65 shown in Fig. 5 can be a part of the storage 103.

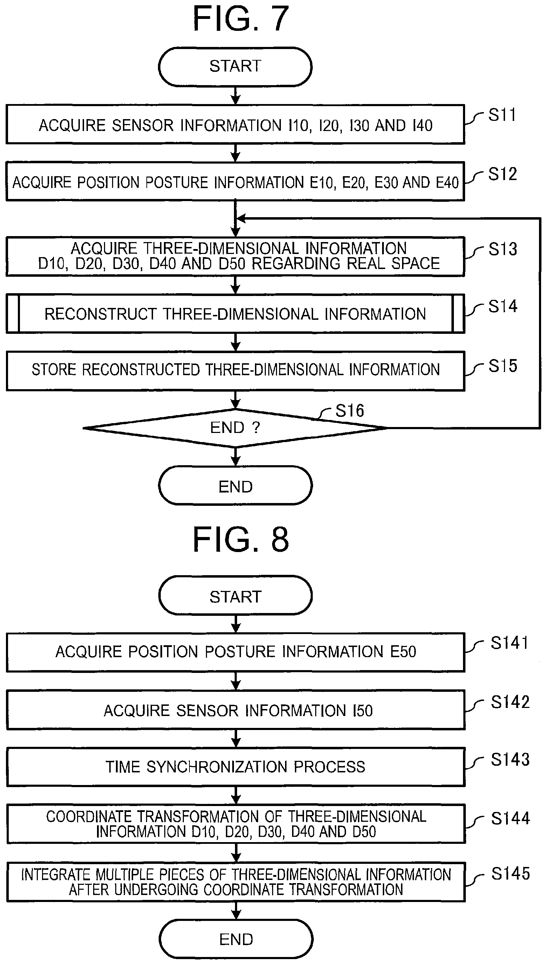

Fig. 7 is a flowchart showing an operation of the three-dimensional reconstruction device 60 according to the first embodiment. However, the operation of the three-dimensional reconstruction device 60 is not limited to the example shown in Fig. 7 and a variety of modifications are possible.

In step S11, the sensor information acquisition unit 62 acquires the sensor information I10, I20, I30 and I40 on the sensors 10, 20, 30 and 40. The sensor information I10, I20, I30, I40 is, for example, an intrinsic parameter in the sensor capable of three-dimensional measurement.

In step S12, the position posture information acquisition unit 61 acquires the position posture information E10, E20, E30 and E40 on the sensors 10, 20, 30 and 40. The position and the posture of each sensor 10, 20, 30, 40 in this case is represented by the world coordinate system.

In step S13, the three-dimensional information acquisition unit 63 acquires the three-dimensional information D10, D20, D30, D40 and D50 regarding the real space from the sensors 10, 20, 30, 40 and 50.

In step S14, the three-dimensional reconstruction unit 64 reconstructs the three-dimensional information by integrating the three-dimensional information D10, D20, D30, D40 and D50 regarding the real space by using the sensor information I10, I20, I30 and I40, the sensor information I50, the position posture information E10, E20, E30 and E40, and the position posture information E50. The three-dimensional information D10, D20, D30, D40 and D50 to be integrated are desired to be pieces of information sampled at the same time.

In step S15, the reconstructed three-dimensional information is stored in the storage unit 65. A time stamp as additional information indicating the time is assigned to the reconstructed three-dimensional information stored in the storage unit 65. The three-dimensional information to which the time stamp has been assigned can be displayed on the display device 105 shown in Fig. 6 as motion video or a still image.

The processing from the step S13 to the step S15 is repeated at constant time intervals until a termination command is inputted, for example.

Fig. 8 is a flowchart showing the operation in the step S14 as the three-dimensional information reconstruction process in Fig. 7. However, the three-dimensional information reconstruction process is not limited to the example shown in Fig. 8 and a variety of modifications are possible.

In step S141, the position posture information acquisition unit 61 acquires the position posture information E50 on the movable sensor 50.

In step S142, the sensor information acquisition unit 62 acquires the sensor information I50 on the movable sensor 50.

In step S143, the three-dimensional reconstruction unit 64 executes time synchronization of the sensors 10, 20, 30, 40 and 50. By the time synchronization, the time in each sensor 10, 20, 30, 40, 50 is synchronized with the time in the three-dimensional reconstruction device 60.

In step S144, the three-dimensional reconstruction unit 64 performs coordinate transformation for transforming the three-dimensional information represented by a point cloud (point group) in the coordinate system of each sensor 10, 20, 30, 40, 50 to three-dimensional information represented by a point cloud in the world coordinate system as a common coordinate system.

In step S145, the three-dimensional reconstruction unit 64 executes a process for integrating the three-dimensional information after undergoing the coordinate transformation. At that time, processes such as a process of deleting three-dimensional information on one side in three-dimensional information parts overlapping with each other are executed. The deletion of three-dimensional information can be executed by a publicly known method. An example of the publicly known method is a method using a voxel filter.

As described above, with the three-dimensional reconstruction system 1, the three-dimensional reconstruction method or the three-dimensional reconstruction program according to the first embodiment, the three-dimensional information can be reconstructed and stored in the storage unit 65 without lacking the information on the attention part A1. Further, even when the attention part A1 is situated in the detection range, there is a danger that the amount of the real space information drops (e.g., resolution or the like drops) in a case where the distance from the sensor to the attention part A1 is long. Nevertheless, with the three-dimensional reconstruction system 1, the three-dimensional reconstruction method or the three-dimensional reconstruction program according to the first embodiment, it is possible to not only prevent the lack of the information on the attention part A1 but also keep on continuously acquiring the three-dimensional information representing the attention part A1 in detail and the three-dimensional information representing wide space including the attention part A1.

Furthermore, the increase in the cost for the system can be inhibited since it is unnecessary in the first embodiment to add a large number of sensors along moving paths of the target object A0. Moreover, three-dimensional information representing the attention part A1 in more detail or three-dimensional information representing space including the whole of the attention part A1 can be reconstructed at a low cost.

### Second Embodiment

In the above first embodiment, the description was given of an example in which the sensors 10, 20, 30, 40 and 50 are directly connected to the three-dimensional reconstruction device 60. However, it is also possible for each sensor 10, 20, 30, 40, 50 and the three-dimensional reconstruction device to perform communication with each other via a sensor control device having a wireless communication function.

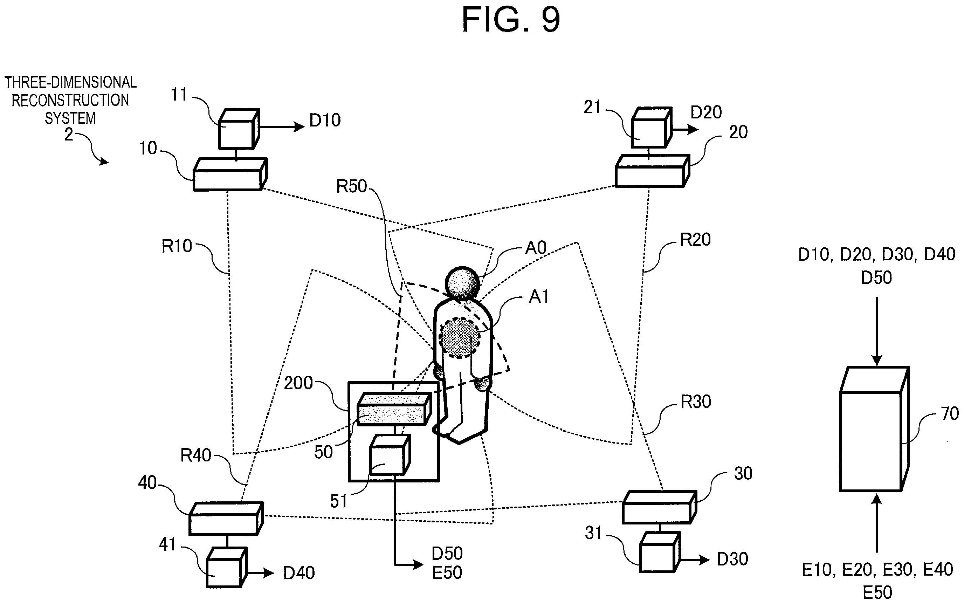

Fig. 9 is a diagram schematically showing an example of arrangement of a plurality of sensors 10, 20, 30, 40 and 50 that provide a three-dimensional reconstruction device 70 according to a second embodiment with the three-dimensional information as the real space information and target object A0 existing in the real space. In Fig. 9, each component identical or corresponding to a component shown in Fig. 1 is assigned the same reference character as in Fig. 1. The three-dimensional reconstruction device 70 is a device capable of executing a three-dimensional reconstruction method according to the second embodiment. In the second embodiment, the sensors 10, 20, 30, 40 and 50 respectively perform communication with the three-dimensional reconstruction device 70 via sensor control devices 11, 21, 31, 41 and 51. The three-dimensional reconstruction device 70, the sensors 10, 20, 30, 40 and 50, and the sensor control devices 11, 21, 31, 41 and 51 constitute a three-dimensional reconstruction system 2.

Each sensor control device 11, 21, 31, 41, 51 transmits the three-dimensional information D10, D20, D30, D40, D50 detected by the sensor 10, 20, 30, 40, 50 to the three-dimensional reconstruction device 70. Further, the sensor control device 11, 21, 31, 41, 51 may transmit the sensor information I10, I20, I30, I40, I50 and the position posture information E10, E20, E30, E40, E50 on the sensor 10, 20, 30, 40, 50 to the three-dimensional reconstruction device 70.

Furthermore, in the second embodiment, the sensor 50 and the sensor control device 51 are mounted on an unmanned moving apparatus 200 as a moving apparatus. The unmanned moving apparatus 200 can also be an unmanned vehicle, an unmanned aircraft, an unmanned vessel, an unmanned submersible ship or the like, for example. The unmanned moving apparatus 200 also has a mechanism that changes the posture of the sensor 50. The unmanned moving apparatus 200 also has the automatic tracking function of controlling the position and the posture of the sensor 50 based on detection information acquired by the sensor 50 so that the sensor 50 keeps on detecting the attention part A1.

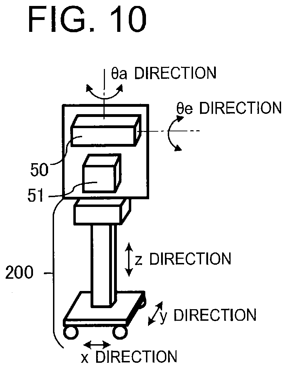

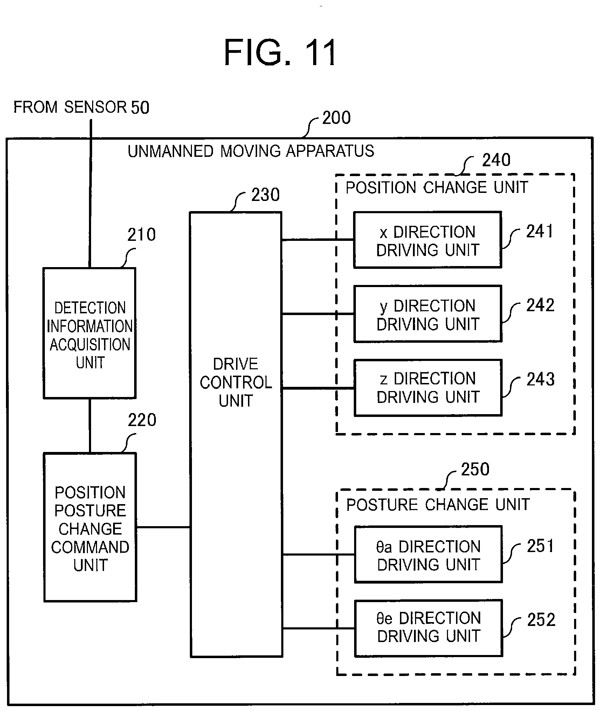

Fig. 10 is a schematic diagram showing a configuration example of the unmanned moving apparatus 200. Fig. 11 is a functional block diagram schematically showing the configuration of the unmanned moving apparatus 200. The unmanned moving apparatus 200 includes a detection information acquisition unit 210 that acquires the three-dimensional information D50 regarding the real space from the sensor 50, a position posture change command unit 220 that generates change command information regarding the position and the posture of the sensor 50 based on the three-dimensional information D50, a drive control unit 230, a position change unit 240, and a posture change unit 250. The detection information acquisition unit 210 is desired to acquire the three-dimensional information D50 in real time. The detection information acquisition unit 210 may also acquire the position posture information E50. In this case, the detection information acquisition unit 210 is desired to acquire the position posture information E50 in real time.

The position change unit 240 of the unmanned moving apparatus 200 includes an x direction driving unit 241 and a y direction driving unit 242 as traveling mechanisms traveling on a floor surface in an x direction and a y direction orthogonal to each other. Each of the x direction driving unit 241 and the y direction driving unit 242 includes wheels, a motor that generates driving force for driving the wheels, a power transmission mechanism such as gears for transmitting the driving force generated by the motor to the wheels, and so forth.

Further, the position change unit 240 includes a z direction driving unit 243 as an elevation mechanism that moves the sensor 50 up and down in a z direction. The z direction driving unit 243 includes a support table that supports components such as the sensor 50, a motor that generates driving force for moving the support table up and down, a power transmission mechanism such as gears for transmitting the driving force generated by the motor to the support table, and so forth.

The posture change unit 250 of the unmanned moving apparatus 200 includes a θa direction driving unit 251 having an azimuth angle changing mechanism that changes an azimuth angle θa of the sensor 50 and a θe direction driving unit 252 having an elevation angle changing mechanism that changes an elevation angle θe of the sensor 50. Each of the θa direction driving unit 251 and the θe direction driving unit 252 includes a motor that generates driving force for rotating the sensor 50 or its support table around a horizontal axis line or a vertical axis line, a power transmission mechanism such as gears for transmitting the driving force generated by the motor to the sensor 50 or its support table, and so forth.

For example, the position posture change command unit 220 extracts a feature point in the attention part A1 in the three-dimensional information D50 and provides the drive control unit 230 with position posture change command information for controlling the position and the posture of the sensor 50 so that the feature point does not deviate from a predetermined detection range. Incidentally, the position posture change command unit 220 may generate the change command information in consideration of the positions of the sensors 10, 20, 30 and 40. For example, the position posture change command unit 220 may permit temporary deviation of the attention part A1 from the detection range R50 of the sensor 50 when the attention part A1 is situated in one of the detection ranges R10, R20, R30 and R40 of the sensors 10, 20, 30 and 40. In this case, the unmanned moving apparatus 200 has acquired information regarding the detection ranges R10, R20, R30 and R40 of the sensors 10, 20, 30 and 40 by a preliminary input operation. The unmanned moving apparatus 200 may also include a communication device that performs communication with the sensors 10, 20, 30 and 40 for acquiring the information regarding the detection ranges R10, R20, R30 and R40 of the sensors 10, 20, 30 and 40.

The drive control unit 230 controls the position change unit 240 and the posture change unit 250 according to the received change command information.

The configurations shown in Fig. 10 and Fig. 11 are applicable also to the first embodiment. It is also possible to implement the configuration of the unmanned moving apparatus 200 shown in Fig. 11 by a memory storing a program and a processor executing the program like the configuration shown in Fig. 6.

Further, the control of the position and the posture of the sensor 50 is not limited to an inside out method but can also be executed by an outside in method. For example, the unmanned moving apparatus 200 may include an external detector that detects the position and the posture of the sensor 50 and the position posture change command unit 220 may output the position posture change command based on a detection signal from the external detector.

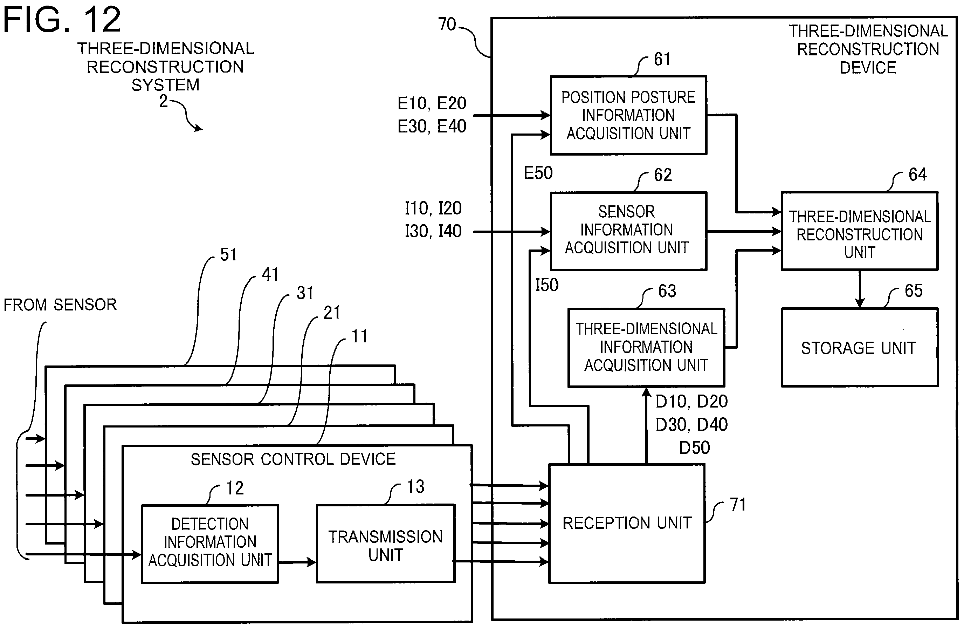

Fig. 12 is a functional block diagram schematically showing a configuration of the three-dimensional reconstruction device 70 according to the second embodiment. In Fig. 12, each component identical or corresponding to a component shown in Fig. 5 is assigned the same reference character as in Fig. 5. The three-dimensional reconstruction device 70 differs from the three-dimensional reconstruction device 60 according to the first embodiment in including a reception unit 71. The reception unit 71 receives information transmitted from the sensors 10, 20, 30, 40 and 50 via the sensor control devices 11, 21, 31, 41 and 51.

Each of the sensor control devices 11, 21, 31, 41 and 51 includes a detection information acquisition unit 12 that acquires detection information obtained by the sensor and a transmission unit 13 that transmits information to the reception unit 71 by radio.

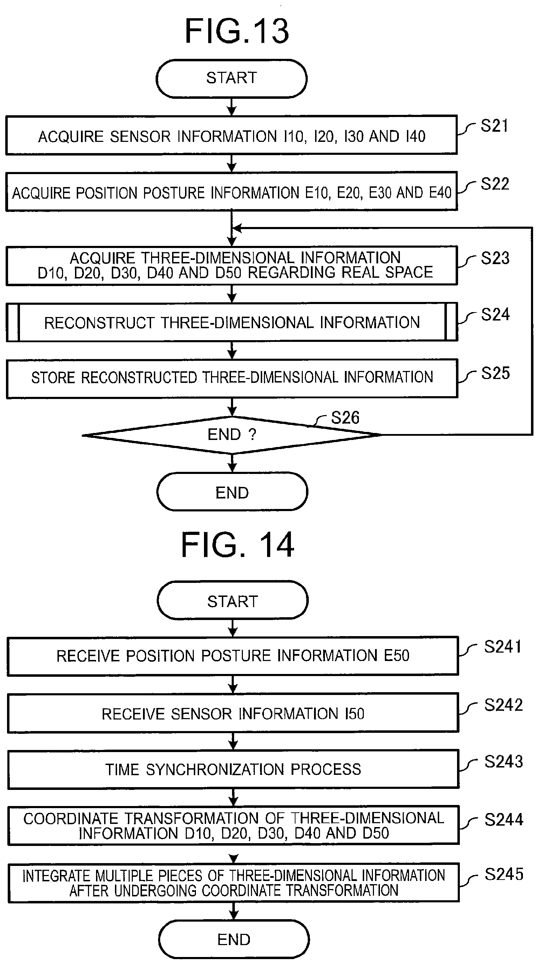

Fig. 13 is a flowchart showing an operation of the three-dimensional reconstruction device 70 according to the second embodiment. Processing in steps S21, S22 and S25 is the same as the processing in the steps S11, S12 and S15 in Fig. 7. Processing in steps S23 and S24 is the same as the processing in the steps S13 and S14 in Fig. 7. However, in the second embodiment, the three-dimensional reconstruction device 70 acquires various items of information via the reception unit 71.

In the step S23, the reception unit 71 receives the three-dimensional information D10, D20, D30, D40 and D50 regarding the real space from the sensors 10, 20, 30, 40 and 50 via the sensor control devices 11, 21, 31, 41 and 51. The three-dimensional information acquisition unit 63 acquires the three-dimensional information D10, D20, D30, D40 and D50 regarding the real space from the reception unit 71.

Fig. 14 is a flowchart showing the operation in the step S24 as the three-dimensional information reconstruction process in Fig. 13. In step S241, the reception unit 71 receives the position posture information E50 on the movable sensor 50, and the position posture information acquisition unit 61 acquires the position posture information E50 from the reception unit 71.

In step S242, the reception unit 71 receives the sensor information I50 on the movable sensor 50, and the sensor information acquisition unit 62 acquires the sensor information I50 from the reception unit 71.

Processing from step S243 to step S245 is the same as the processing from the step S143 to the step S145 in Fig. 8.

As described above, with the three-dimensional reconstruction system 2, the three-dimensional reconstruction method or the three-dimensional reconstruction program according to the second embodiment, the three-dimensional information can be reconstructed without lacking the information on the attention part A1.

Furthermore, the increase in the cost for the system can be inhibited since it is unnecessary to add a large number of sensors along moving paths of the target object A0.

Except for the above-described features, the second embodiment is the same as the first embodiment.

### Modification of Second Embodiment

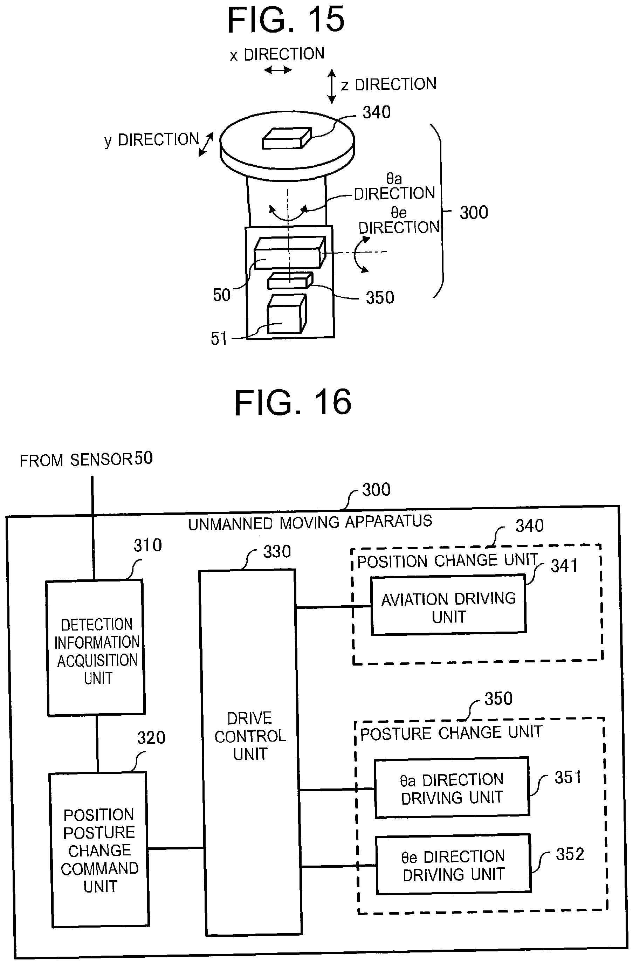

Fig. 15 is a schematic diagram showing a configuration example of an unmanned moving apparatus 300. Fig. 16 is a functional block diagram schematically showing the configuration of the unmanned moving apparatus 300. The unmanned moving apparatus 300 includes a detection information acquisition unit 310 that acquires the three-dimensional information D50 regarding the real space from the sensor 50 in real time, a position posture change command unit 320 that generates change command information regarding the position and the posture of the sensor 50 based on the three-dimensional information D50, a drive control unit 330, a position change unit 340, and a posture change unit 350.

The unmanned moving apparatus 300 includes an unmanned aircraft. The position change unit 340 of the unmanned moving apparatus 300 includes an aviation driving unit 341 for movement in the air in the x direction, the y direction and the z direction orthogonal to each other. The aviation driving unit 341 includes a propeller, a motor that generates driving force for rotating the propeller, and so forth.

The posture change unit 350 of the unmanned moving apparatus 300 includes a θa direction driving unit 351 having an azimuth angle changing mechanism that changes the azimuth angle θa of the sensor 50 and a θe direction driving unit 352 having an elevation angle changing mechanism that changes the elevation angle θe of the sensor 50. Each of the θa direction driving unit 351 and the θe direction driving unit 352 includes a motor that generates driving force for rotating the sensor 50 or its support table around a horizontal axis line or a vertical axis line, a power transmission mechanism such as gears for transmitting the driving force generated by the motor to the sensor 50 or its support table, and so forth.

For example, the position posture change command unit 320 extracts a feature point in the attention part A1 in the three-dimensional information D50 and provides the drive control unit 330 with position posture change command information for controlling the position and the posture of the sensor 50 so that the feature point does not deviate from a predetermined detection range. The drive control unit 330 controls the position change unit 340 and the posture change unit 350 according to the received change command information.

The configurations shown in Fig. 15 and Fig. 16 are applicable also to the first embodiment. It is also possible to implement the configuration of the unmanned moving apparatus 300 shown in Fig. 16 by a memory storing a program and a processor executing the program. Except for the above-described features, the example of Fig. 15 and Fig. 16 is the same as the example of Fig. 10 and Fig. 11.

Further, the unmanned moving apparatus 300 can also be an unmanned vessel that moves on the water, an unmanned submersible ship that moves in the water, an unmanned vehicle that travels on previously laid rails, or the like.

The three-dimensional reconstruction devices and the three-dimensional reconstruction systems described in the above embodiments are applicable to monitoring of work performed by a worker in a factory, monitoring of products in the middle of production, and so forth.

### DESCRIPTION OF REFERENCE CHARACTERS

1, 2: three-dimensional reconstruction system, 10, 20, 30, 40: sensor, 50: sensor, 11, 21, 31, 41, 51: sensor control device, 12: detection information acquisition unit, 13: transmission unit, 60, 70: three-dimensional reconstruction device, 61: position posture information acquisition unit, 62: sensor information acquisition unit, 63: three-dimensional information acquisition unit, 64: three-dimensional reconstruction unit, 65: storage unit, 71: reception unit, 200, 300: unmanned moving apparatus, 210, 310: detection information acquisition unit, 220, 320: position posture change command unit, 230, 330: drive control unit, 240, 340: position change unit, 250, 350: posture change unit, A0: target object, A1: attention part, D10, D20, D30, D40: three-dimensional information, D50: three-dimensional information, E10, E20, E30, E40: position posture information, E50: position posture information, I10, I20, I30, I40: sensor information, I50: sensor information, R10, R20, R30, R40: detection range, R50: detection range.

## Claims

1. A three-dimensional reconstruction system (1, 2) comprising:
a first sensor (10, 20, 30, 40) that is arranged at a predetermined position and generates first three-dimensional information (D10, D20, D30, D40) representing a target object (A0) by detecting the target object (A0)that is moving;
a second sensor (50) that is provided to be movable and generates second three-dimensional information (D50) representing an attention part (A1) of the target object (A0) by detecting the attention part (A1);
a three-dimensional information acquisition unit (63) that acquires the first three-dimensional information (D10, D20, D30, D40) and the second three-dimensional information (D50);
a sensor information acquisition unit (62) that acquires first sensor information (I10, I20, I30,I40) indicating a property intrinsic to the first sensor (10, 20, 30, 40) and second sensor information (I50) indicating a property intrinsic to the second sensor (50);
a position posture information acquisition unit (61) that acquires first position posture information (E10, E20, E30, E40) indicating a position and posture of the first sensor (10, 20, 30, 40) and acquires second position posture information (E50) indicating a position and posture of the second sensor (50);
a three-dimensional reconstruction unit (64) that reconstructs the three-dimensional information representing the attention part (A1) from the first three-dimensional information (D10, D20, D30, D40) and the second three-dimensional information (D50) by using the first sensor information (I10, I20, I30,I40), the second sensor information (I50), the first position posture information (E10, E20, E30, E40) and the second position posture information (E50); and
a movement apparatus (200, 300) that changes the position and the posture of the second sensor (50),
**characterized in that** the movement apparatus (200, 300) has an automatic tracking function to control the position and the posture of the second sensor (50) based on the second three-dimensional information (D50) so that the attention part (A1) does not deviate from a detection range of the second sensor (50) and so that the second sensor (50) keeps on detecting the attention part (A1) .

2. The three-dimensional reconstruction system according to claim 1, wherein the movement apparatus (200, 300) acquires the second three-dimensional information (D50) from the second sensor (50) in real time.

3. The three-dimensional reconstruction system according to claim 1 or 2, wherein the movement apparatus (200, 300) acquires the second position posture information (E50) from the second sensor (50) in real time.

4. The three-dimensional reconstruction system according to any one of claims 1 to 3, wherein the movement apparatus (200, 300) controls the movement of the second sensor (50) in consideration of the position of the first sensor (10, 20, 30, 40).

5. The three-dimensional reconstruction system according to any one of claims 1 to 4, wherein the position posture information acquisition unit (61) estimates the position and the posture of the second sensor (50) based on movement of the attention part (A1) in the second three-dimensional information (D50).

6. The three-dimensional reconstruction system according to any one of claims 1 to 5, wherein
the three-dimensional information acquisition unit (63) acquires a plurality of pieces of the first three-dimensional information (D10, D20, D30, D40) from a plurality of the first sensors,
the sensor information acquisition unit (62) acquires a plurality of pieces of the first sensor information (I10, I20, I30, I40) ,
the position posture information acquisition unit (61) acquires a plurality of pieces of the first position posture information (E10, E20, E30, E40), and
the three-dimensional reconstruction unit (64) reconstructs the three-dimensional information from the plurality of pieces of the first three-dimensional information (D10, D20, D30, D40) and the second three-dimensional information (D50) by using the plurality of pieces of the first sensor information (110, I20, I30, I40), the second sensor information (I50), the plurality of pieces of the first position posture information (E10, E20, E30, E40) and the second position posture information (E50).

7. The three-dimensional reconstruction system according to any one of claims 1 to 6, further comprising a storage unit that stores the three-dimensional information reconstructed by the three-dimensional reconstruction unit (64).

8. A three-dimensional reconstruction method comprising:
a step of acquiring first three-dimensional information (D10, D20, D30, D40) representing a target object (A0) from a first sensor (10) that is arranged at a predetermined position and generates the first three-dimensional information (D10, D20, D30, D40) by detecting the target object (A0) that is moving;
a step of acquiring second three-dimensional information (D50) representing an attention part (A1) of the target object (A0) from a second sensor (50) that is provided to be movable and generates the second three-dimensional information (D50) by detecting the attention part (A1);
a step of acquiring first sensor information (110, I20, I30, I40) indicating a property intrinsic to the first sensor (10, 20, 30, 40);
a step of acquiring second sensor information (I50) indicating a property intrinsic to the second sensor (50);
a step of acquiring first position posture information (E10, E20, E30, E40) indicating a position and posture of the first sensor (10, 20, 30, 40);
a step of acquiring second position posture information (E50) indicating a position and posture of the second sensor (50); and
a step of reconstructing the three-dimensional information representing the attention part (A1) from the first three-dimensional information (D10, D20, D30, D40) and the second three-dimensional information (D50) by using the first sensor information (110, I20, I30, I40), the second sensor information (I50), the first position posture information (E10, E20, E30, E40) and the second position posture information (E50),
and **characterized by** a step of controlling, with a movement apparatus (200, 300) that changes the position and the posture of the second sensor (50) and that has an automatic tracking function, the position and the posture of the second sensor (50) based on the second three-dimensional information (D50) so that the attention part (A1) does not deviate from a detection range of the second sensor (50) and so that the second sensor (50) keeps on detecting the attention part (A1).

9. A three-dimensional reconstruction program that causes a computer to execute:
a process of acquiring first three-dimensional information (D10, D20, D30, D40) representing a target object (A0) from a first sensor (10, 20, 30, 40) that is arranged at a predetermined position and generates the first three-dimensional information (D10, D20, D30, D40) by detecting the target object (A0) that is moving;
a process of acquiring second three-dimensional information (D50) representing an attention part (A1) of the target object (A0) from a second sensor (50) that is provided to be movable and generates the second three-dimensional information (D50) by detecting the attention part (A1);
a process of acquiring first sensor information (I10, I20, I30, I40) indicating a property intrinsic to the first sensor (10, 20, 30, 40);
a process of acquiring second sensor information (I50) indicating a property intrinsic to the second sensor (50);
a process of acquiring first position posture information (E10, E20, E30, E40) indicating a position and posture of the first sensor (10, 20, 30, 40);
a process of acquiring second position posture information (E50) indicating a position and posture of the second sensor (50); and
a process of reconstructing the three-dimensional information representing the attention part (A1) from the first three-dimensional information (D10, D20, D30, D40) and the second three-dimensional information (D50) by using the first sensor information (110, I20, I30, I40), the second sensor information (I50), the first position posture information (E10, E20, E30, E40) and the second position posture information (E50) and **characterized by** the three-dimensional reconstruction program further causing the computer to execute a process of controlling, with a movement apparatus (200, 300) that changes the position and the posture of the second sensor (50) and that has an automatic tracking function, the position and the posture of the second sensor (50) based on the second three-dimensional information (D50) so that the attention part (A1) does not deviate from a detection range of the second sensor (50) and so that the second sensor (50) keeps on detecting the attention part (A1).

## Patentansprüche

1. Dreidimensionales Rekonstruktionssystem (1, 2), aufweisend:
einen ersten Sensor (10, 20, 30, 40), der an einer vorgegebenen Position angeordnet ist und erste dreidimensionale Informationen (D10, D20, D30, D40) erzeugt, die ein Zielobjekt (A0) darstellen, indem das Zielobjekt (A0), das sich bewegt, erfasst wird;
einen zweiten Sensor (50), der beweglich vorgesehen ist und zweite dreidimensionale Informationen (D50) erzeugt, die einen Aufmerksamkeitsteil (A1) des Zielobjekts (A0) darstellen, indem der Aufmerksamkeitsteil (A1) erfasst wird;
eine Dreidimensionale-Informationen-Beschaffungseinheit (63), die die ersten dreidimensionalen Informationen (D10, D20, D30, D40) und die zweiten dreidimensionalen Informationen (D50) beschafft;
eine Sensorinformationen-Beschaffungseinheit (62), die erste Sensorinformationen (110, 120, 130, 140), die eine dem ersten Sensor (10, 20, 30, 40) innewohnende Eigenschaft angeben, und zweite Sensorinformationen (150), die eine dem zweiten Sensor (50) innewohnende Eigenschaft angeben, beschafft;
eine Position-Lage-Informationen-Beschaffungseinheit (61), die erste Position-Lage-Informationen (E10, E20, E30, E40) beschafft, die eine Position und Lage des ersten Sensors (10, 20, 30, 40) angeben, und zweite Position-Lage-Informationen (E50) beschafft, die eine Position und Lage des zweiten Sensors (50) angeben;
eine dreidimensionale Rekonstruktionseinheit (64), die die dreidimensionalen Informationen, die den Aufmerksamkeitsteil (A1) darstellen, aus den ersten dreidimensionalen Informationen (D10, D20, D30, D40) und den zweiten dreidimensionalen Informationen (D50) unter Verwendung der ersten Sensorinformationen (110, 120, 130, 140), der zweiten Sensorinformationen (150), der ersten Position-Lage-Informationen (E10, E20, E30, E40) und der zweiten Position-Lage-Informationen (E50) rekonstruiert; und
eine Bewegungsvorrichtung (200, 300), die die Position und die Lage des zweiten Sensors (50) verändert,
**dadurch gekennzeichnet, dass** die Bewegungsvorrichtung (200, 300) eine automatische Nachverfolgungsfunktion aufweist, um die Position und die Lage des zweiten Sensors (50) basierend auf den zweiten dreidimensionalen Informationen (D50) zu steuern, so dass der Aufmerksamkeitsteil (A1) nicht von einem Erfassungsbereich des zweiten Sensors (50) abweicht und so dass der zweite Sensor (50) den Aufmerksamkeitsteil (A1) weiterhin erfasst.

2. Dreidimensionales Rekonstruktionssystem nach Anspruch 1, wobei die Bewegungsvorrichtung (200, 300) die zweiten dreidimensionalen Informationen (D50) von dem zweiten Sensor (50) in Echtzeit beschafft.

3. Dreidimensionales Rekonstruktionssystem nach Anspruch 1 oder 2, wobei die Bewegungsvorrichtung (200, 300) die zweiten dreidimensionalen Position-Lage-Informationen (E50) von dem zweiten Sensor (50) in Echtzeit beschafft.

4. Dreidimensionales Rekonstruktionssystem nach einem der Ansprüche 1 bis 3, wobei die Bewegungsvorrichtung (200, 300) die Bewegung des zweiten Sensors (50) unter Berücksichtigung von der Position des ersten Sensors (10, 20, 30, 40) steuert.

5. Dreidimensionales Rekonstruktionssystem nach einem der Ansprüche 1 bis 4,
wobei die Position-Lage-Informationen-Beschaffungseinheit (61) die Position und die Lage des zweiten Sensors (50) basierend auf einer Bewegung des Aufmerksamkeitsteils (A1) in den zweiten dreidimensionalen Informationen (D50) schätzt.

6. Dreidimensionales Rekonstruktionssystem nach einem der Ansprüche 1 bis 5, wobei
die Dreidimensionale-Informationen-Beschaffungseinheit (63) eine Vielzahl von Teilen der ersten dreidimensionalen Informationen (D10, D20, D30, D40) von einer Vielzahl der ersten Sensoren beschafft,
die Sensorinformationen-Beschaffungseinheit (62) eine Vielzahl von Teilen der ersten Sensorinformationen (110, 120, 130, 140) beschafft,
die Position-Lage-Informationen-Beschaffungseinheit (61) eine Vielzahl von Teilen der ersten Position-Lage-Informationen (E10, E20, E30, E40) beschafft, und
die dreidimensionale Rekonstruktionseinheit (64), die dreidimensionalen Informationen aus der Vielzahl von Teilen der ersten dreidimensionalen Informationen (D10, D20, D30, D40) und der zweiten dreidimensionalen Informationen (D50) unter Verwendung der Vielzahl von Teilen der ersten Sensorinformationen (110, 120, 130, 140), der zweiten Sensorinformationen (150), der Vielzahl von Teilen der ersten Position-Lage-Informationen (E10, E20, E30, E40) und der zweiten Position-Lage-Informationen (E50) rekonstruiert.

7. Dreidimensionales Rekonstruktionssystem nach einem der Ansprüche 1 bis 6,
ferner aufweisend eine Speichereinheit, die die von der dreidimensionalen Rekonstruktionseinheit (64) rekonstruierten dreidimensionalen Informationen speichert.

8. Dreidimensionales Rekonstruktionsverfahren, aufweisend:
einen Schritt des Beschaffens von ersten dreidimensionalen Informationen (D10, D20, D30, D40), die ein Zielobjekt (A0) darstellen, von einem ersten Sensor (10), der an einer vorgegebenen Position angeordnet ist und die ersten dreidimensionalen Informationen (D10, D20, D30, D40) erzeugt, indem das Zielobjekt (A0), das sich bewegt, erfasst wird;
einen Schritt des Beschaffens von zweiten dreidimensionalen Informationen (D50), die einen Aufmerksamkeitsteil (A1) des Zielobjekts (A0) von einem zweiten Sensor (50) darstellen, der beweglich vorgesehen ist und die zweiten dreidimensionalen Informationen (D50) erzeugt, indem der Aufmerksamkeitsteil (A1) erfasst wird;
einen Schritt des Beschaffens von ersten Sensorinformationen (110, 120, 130, 140), die eine dem ersten Sensor (10, 20, 30, 40) innewohnende Eigenschaft angeben;
einen Schritt des Beschaffens von zweiten Sensorinformationen (150), die eine dem zweiten Sensor (50) innewohnende Eigenschaft angeben;
einen Schritt des Beschaffens von ersten Position-Lage-Informationen (E10, E20, E30, E40), die eine Position und Lage des ersten Sensors (10, 20, 30, 40) angeben;
einen Schritt des Beschaffens von zweiten Position-Lage-Informationen (E50), die eine Position und Lage des zweiten Sensors (50) angeben; und
einen Schritt des Rekonstruierens der dreidimensionalen Informationen, die den Aufmerksamkeitsteil (A1) darstellen, aus den ersten dreidimensionalen Informationen (D10, D20, D30, D40) und den zweiten dreidimensionalen Informationen (D50) unter Verwendung der ersten Sensorinformationen (110, 120, 130, 140), der zweiten Sensorinformationen (150), der ersten Position-Lage-Informationen (E10, E20, E30, E40) und der zweiten Position-Lage-Informationen (E50),
und **gekennzeichnet durch** einen Schritt des Steuerns, mit einer Bewegungsvorrichtung (200, 300), welche die Position und die Lage des zweiten Sensors (50) ändert und die eine automatische Nachverfolgungsfunktion aufweist, der Position und der Lage des zweiten Sensors (50) basierend auf den zweiten dreidimensionalen Informationen (D50), so dass der Aufmerksamkeitsteil (A1) nicht von einem Erfassungsbereich des zweiten Sensors (50) abweicht und so dass der zweite Sensor (50) den Aufmerksamkeitsteil (A1) weiterhin erfasst.

9. Dreidimensionales Rekonstruktionsprogramm, das einen Computer veranlasst, auszuführen:
einen Prozess des Beschaffens von ersten dreidimensionalen Informationen (D10, D20, D30, D40), die ein Zielobjekt (A0) darstellen, von einem ersten Sensor (10, 20, 30, 40), der an einer vorgegebenen Position angeordnet ist und die ersten dreidimensionalen Informationen (D10, D20, D30, D40) erzeugt, indem das Zielobjekt (A0), das sich bewegt, erfasst wird;
einen Prozess des Beschaffens von zweiten dreidimensionalen Informationen (D50), die einen Aufmerksamkeitsteil (A1) des Zielobjekts (A0) von einem zweiten Sensor (50) darstellen, der beweglich vorgesehen ist und die zweiten dreidimensionalen Informationen (D50) erzeugt, indem der Aufmerksamkeitsteil (A1) erfasst wird;
einen Prozess des Beschaffens von ersten Sensorinformationen (110, 120, 130, 140), die eine dem ersten Sensor (10, 20, 30, 40) innewohnende Eigenschaft angeben;
einen Prozess des Beschaffens von zweiten Sensorinformationen (150), die eine dem zweiten Sensor (50) innewohnende Eigenschaft angeben;
einen Prozess des Beschaffens von ersten Position-Lage-Informationen (E10, E20, E30, E40), die eine Position und Lage des ersten Sensors (10, 20, 30, 40) angeben;
einen Prozess des Beschaffens von zweiten Position-Lage-Informationen (E50), die eine Position und Lage des zweiten Sensors (50) angeben; und
einen Prozess des Rekonstruierens der dreidimensionalen Informationen, die den Aufmerksamkeitsteil (A1) darstellen, aus den ersten dreidimensionalen Informationen (D10, D20, D30, D40) und den zweiten dreidimensionalen Informationen (D50) unter Verwendung der ersten Sensorinformationen (110, 120, 130, 140), der zweiten Sensorinformationen (150), der ersten Position-Lage-Informationen (E10, E20, E30, E40) und der zweiten Position-Lage-Informationen (E50),
und **gekennzeichnet durch** das dreidimensionale Rekonstruktionsprogramm, das ferner den Computer veranlasst zum Ausführen eines Prozesses des Steuerns, mit einer Bewegungsvorrichtung (200, 300), welche die Position und die Lage des zweiten Sensors (50) ändert und die eine automatische Nachverfolgungsfunktion aufweist, der Position und der Lage des zweiten Sensors (50) basierend auf den zweiten dreidimensionalen Informationen (D50), so dass der Aufmerksamkeitsteil (A1) nicht von einem Erfassungsbereich des zweiten Sensors (50) abweicht und so dass der zweite Sensor (50) den Aufmerksamkeitsteil (A1) weiterhin erfasst.

## Revendications

1. Système de reconstruction tridimensionnelle (1, 2) comprenant :
un premier capteur (10, 20, 30, 40) qui est agencé à une position prédéterminée et génère de premières informations tridimensionnelles (D10, D20, D30, D40) représentant un objet cible (A0) en détectant l'objet cible (A0) qui se déplace ;
un second capteur (50) qui est prévu pour être déplaçable et génère de secondes informations tridimensionnelles (D50) représentant une partie d'attention (A1) de l'objet cible (A0) en détectant la partie d'attention (A1) ;
une unité d'acquisition d'informations tridimensionnelles (63) qui acquiert les premières informations tridimensionnelles (D10, D20, D30, D40) et les secondes informations tridimensionnelles (D50) ;
une unité d'acquisition d'informations de capteur (62) qui acquiert les premières informations de capteur (110, 120, 130, 140) indiquant une propriété intrinsèque au premier capteur (10, 20, 30, 40) et les secondes informations de capteur (150) indiquant une propriété intrinsèque au second capteur (50) ;
une unité d'acquisition d'informations posture de position (61) qui acquiert de premières informations de posture de position (E10, E20, E30, E40) indiquant une position et posture du premier capteur (10, 20, 30, 40) et acquiert de secondes informations de posture de position (E50) indiquant une position et posture du second capteur (50) ;
une unité de reconstruction tridimensionnelle (64) qui reconstruit les informations tridimensionnelles représentant la partie d'attention (A1) à partir des premières informations tridimensionnelles (D10, D20, D30, D40) et des secondes informations tridimensionnelles (D50) en utilisant les premières informations de capteur (110, 120, 130, 140), les secondes informations de capteur (150), les premières informations de posture de position (E10, E20, E30, E40) et les secondes informations de posture de position (E50) ; et
un appareil de mouvement (200, 300) qui change la position et la posture du second capteur (50),
**caractérisé en ce que** l'appareil de mouvement (200, 300) présente une fonction de suivi automatique pour commander la position et la posture du second capteur (50) sur la base de la seconde information tridimensionnelle (D50) de sorte que la partie d'attention (A1) ne s'écarte pas d'une plage de détection du second capteur (50) et de sorte que le second capteur (50) continue à détecter la partie d'attention (A1).

2. Système de reconstruction tridimensionnelle selon la revendication 1, dans lequel l'appareil de mouvement (200, 300) acquiert les secondes informations tridimensionnelles (D50) à partir du second capteur (50) en temps réel.

3. Système de reconstruction tridimensionnelle selon la revendication 1 ou 2, dans lequel l'appareil de mouvement (200, 300) acquiert les secondes informations de posture de position (E50) à partir du second capteur (50) en temps réel.

4. Système de reconstruction tridimensionnelle selon l'une quelconque des revendications 1 à 3, dans lequel l'appareil de mouvement (200, 300) commande le mouvement du second capteur (50) en prenant en compte la position du premier capteur (10, 20, 30, 40).

5. Système de reconstruction tridimensionnelle selon l'une quelconque des revendications 1 à 4,
dans lequel l'unité d'acquisition d'informations de posture de position (61) estime la position et la posture du second capteur (50) sur la base du mouvement de la partie d'attention (A1) dans les secondes informations tridimensionnelles (D50).

6. Système de reconstruction tridimensionnelle selon l'une quelconque des revendications 1 à 5, dans lequel
l'unité d'acquisition d'informations tridimensionnelles (63) acquiert une pluralité de morceaux des premières informations tridimensionnelles (D10, D20, D30, D40) à partir d'une pluralité des premiers capteurs,
l'unité d'acquisition d'informations de capteur (62) acquiert une pluralité de morceaux des premières informations de capteur (110, 120, 130, 140),
l'unité d'acquisition d'informations de posture de position (61) acquiert une pluralité de morceaux des premières informations de posture de position (E10, E20, E30, E40), et
l'unité de reconstruction tridimensionnelle (64) reconstruit les informations tridimensionnelles à partir de la pluralité de morceaux des premières informations tridimensionnelles (D10, D20, D30, D40) et des secondes informations tridimensionnelles (D50) en utilisant la pluralité de morceaux des premières informations de capteur (110, 120, 130, 140), des secondes informations de capteur (150), de la pluralité de morceaux des premières informations de posture de position (E10, E20, E30, E40) et des secondes informations de posture de position (E50).

7. Système de reconstruction tridimensionnelle selon l'une quelconque des revendications 1 à 6,
comprenant en outre une unité de stockage qui stocke les informations tridimensionnelles reconstruites par l'unité de reconstruction tridimensionnelle (64).

8. Procédé de reconstruction tridimensionnelle comprenant :
une étape d'acquisition de premières informations tridimensionnelles (D10, D20, D30, D40) représentant un objet cible (A0) à partir d'un premier capteur (10) qui est agencé à une position prédéterminée et génère les premières informations tridimensionnelles (D10, D20, D30, D40) en détectant l'objet cible (A0) qui se déplace ;
une étape d'acquisition de secondes informations tridimensionnelles (D50) représentant une partie d'attention (A1) de l'objet cible (A0) à partir d'un second capteur (50) qui est prévu pour être déplaçable et génère les secondes informations tridimensionnelles (D50) en détectant la partie d'attention (A1) ;
une étape d'acquisition de premières informations de capteur (110, 120, 130, 140) indiquant une propriété intrinsèque au premier capteur (10, 20, 30, 40) ;
une étape d'acquisition de secondes informations de capteur (150) indiquant une propriété intrinsèque au second capteur (50) ;
une étape d'acquisition de premières informations de posture de position (E10, E20, E30, E40) indiquant une position et une posture du premier capteur (10, 20, 30, 40) ;
une étape d'acquisition de secondes informations de posture de position (E50) indiquant une position et posture du second capteur (50) ; et
une étape de reconstruction des informations tridimensionnelles représentant la partie d'attention (A1) à partir des premières informations tridimensionnelles (D10, D20, D30, D40) et des secondes informations tridimensionnelles (D50) en utilisant les premières informations de capteur (110, 120, 130, 140), les secondes informations de capteur (150), les premières informations de posture de position (E10, E20, E30, E40) et les secondes informations de posture de position (E50),
et **caractérisé par** une étape de commande, avec un appareil de mouvement (200, 300) qui change la position et la posture du second capteur (50) et qui présente une fonction de suivi automatique, la position et la posture du second capteur (50) sur la base des secondes informations tridimensionnelles (D50) de sorte que la partie d'attention (A1) ne s'écarte pas d'une plage de détection du second capteur (50) et de sorte que le second capteur (50) continue à détecter la partie d'attention (A1).

9. Programme de reconstruction tridimensionnelle qui amène un ordinateur à exécuter :
un procédé d'acquisition de premières informations tridimensionnelles (D10, D20, D30, D40) représentant un objet cible (A0) à partir d'un premier capteur (10, 20, 30, 40) qui est agencé à une position prédéterminée et génère les premières informations tridimensionnelles (D10, D20, D30, D40) en détectant l'objet cible (A0) qui se déplace ;
un procédé d'acquisition de secondes informations tridimensionnelles (D50) représentant une partie d'attention (Al) de l'objet cible (A0) à partir d'un second capteur (50) qui est prévu pour être déplaçable et génère les secondes informations tridimensionnelles (D50) en détectant la partie d'attention (A1) ;
un procédé d'acquisition de premières informations de capteur (110, 120, 130, 140) indiquant une propriété intrinsèque au premier capteur (10, 20, 30, 40) ;
un procédé d'acquisition de secondes informations de capteur (150) indiquant une propriété intrinsèque au second capteur (50) ;
un procédé d'acquisition de premières informations de posture de position (E10, E20, E30, E40) indiquant une position et une posture du premier capteur (10, 20, 30, 40) ;
un procédé d'acquisition de secondes informations de posture de position (E50) indiquant une position et une posture du second capteur (50) ; et
un procédé de reconstruction des informations tridimensionnelles représentant la partie d'attention (Al) à partir des premières informations tridimensionnelles (D10, D20, D30, D40) et des secondes informations tridimensionnelles (D50) en utilisant les premières informations de capteur (110, 120, 130, 140), les secondes informations de capteur (150), les premières informations de posture de position (E10, E20, E30, E40) et les secondes informations de posture de position (E50),
et **caractérisé par** le programme de reconstruction tridimensionnelle amenant en outre l'ordinateur à exécuter un procédé de commande, avec un appareil de mouvement (200, 300) qui change la position et la posture du second capteur (50) et qui présente une fonction de suivi automatique, la position et la posture du second capteur (50) sur la base des secondes informations tridimensionnelles (D50) de sorte que la partie d'attention (A1) ne s'écarte pas d'une plage de détection du second capteur (50) et de sorte que le second capteur (50) continue à détecter la partie d'attention (A1).
